# EUROPEAN PATENT APPLICATION

(11) **EP 4 648 307 A1**
(43) Date of publication of application: **12.11.2025**
(21) Application number: 23926202.5
(22) Date of filing: 06.03.2023
(51) Int. Cl.: H04B 10/075

(54) **OPTICAL MONITORING DEVICE, OPTICAL TRANSMISSION SYSTEM, AND OPTICAL MONITORING METHOD**

(71) Applicant: NEC Corporation, 108-8001 Tokyo (JP)
(72) Inventor: TAKESHITA Hitoshi, Tokyo 108-8001 (JP)
(74) Representative: Vossius & Partner Patentanwälte Rechtsanwälte mbB
(86) International application number: PCT/JP2023/008241
(87) International publication number: WO 2024/184988

(57) **Abstract**

To determine, on a per-core basis, the state of light propagation in an optical fiber transmission line, an optical monitoring device according to the present invention comprises: an optical power measuring instrument that accepts input of a first bifurcated light generated by bifurcating light propagating in a core of an optical transmission line in a first direction and a second bifurcated light generated by bifurcating light propagating in the core in a second direction which is a different direction from the first direction, and measures a first optical power and a second optical power, which are the optical power of the first bifurcated light and the optical power of the second bifurcated light, respectively; and a determination circuit that determines the propagation state of light in the optical transmission line by identifying the presence or absence of light propagating in the optical transmission line and the direction of the propagation on the basis of the first optical power and the second optical power, and outputs the determination result.

## Description

### Technical Field

The present invention relates to an optical monitoring device and the like.

### Background Art

In order to increase a transmission capacity of an optical fiber transmission system, it is possible to increase the transmission capacity of an optical cable by bundling a large number of optical fiber cores in one optical cable. The optical fiber core wire is a single-core fiber (SCF) including one core. Such a technique is an example of space division multiplexing (SDM). On the other hand, as a further development of the SDM technology, a multi-core fiber (MCF) in which a plurality of cores is stored in one optical fiber core wire has been studied to be used as an optical transmission line.

In relation to the present invention, PTL 1 discloses an optical repeater having a function of monitoring optical signals input to and output from the optical repeater.

### Citation List

### Patent Literature

PTL 1: JP 7078573 B

### Summary of Invention

### Technical Problem

In an optical cable in which a large number of SCFs is bundled or an optical cable including an MCF, light having different propagation directions for each core may be mixed in one optical cable. Therefore, when an optical transmission apparatus is added in the middle of the optical cable, the propagation state of a light may be capable of being grasped for each core in addition to the propagation direction of the light of the core of each optical fiber core included in the optical cable.

### (Object of Invention)

An object of the present invention is to provide a technique for determining a propagation state of the light in an optical fiber transmission line for each core.

### Solution to Problem

An optical monitoring device according to the present invention includes:
an optical power measurement means for receiving a first split light generated by splitting light propagating through a core of an optical transmission line in a first direction and a second split light generated by splitting light propagating through the core in a second direction that is different from the first direction, and measuring a first optical power that is optical power of the first split light and a second optical power that is optical power of the second split light; and
a determination means for determining a propagation state of light in the optical transmission line by identifying presence or absence of light propagating through the optical transmission line and a propagation direction of the light based on the first optical power and the second optical power, and outputting the propagation state as a determination result.

An optical monitoring method according to the present invention includes:
splitting light propagating through a core of an optical transmission line in a first direction to generate first split light;
splitting light propagating through the core in a second direction different from the first direction to generate second split light;
measuring first optical power that is optical power of the first split light and second optical power that is optical power of the second split light; and
determining a propagation state of light in the optical transmission line by identifying presence or absence of light propagating through the optical transmission line and a propagation direction based on the first optical power and the second optical power.

### Advantageous Effects of Invention

The present invention makes it possible to determine a propagation state of light in an optical fiber transmission line for each core.

### Brief Description of Drawings

[Fig. 1] Fig. 1 is a diagram illustrating a configuration example of an optical transmission system according to a first example embodiment
[Fig. 2] Fig. 2 is a diagram illustrating measurement of optical power in an optical monitor.
[Fig. 3] Fig. 3 is a flowchart illustrating an example of determination of a direction of light propagating through an optical transmission line in a determination circuit.
[Fig. 4] Fig. 4 is a diagram illustrating a configuration example of a modification of an optical monitor
[Fig. 5] Fig. 5 is a diagram illustrating a configuration example of an optical transmission system according to a second example embodiment.
[Fig. 6] Fig. 6 is a diagram illustrating an example of a relationship between measurement results of optical power P1 and P2 and determination.
[Fig. 7] Fig. 7 is a diagram illustrating a configuration example of an optical transmission system according to a third example embodiment.
[Fig. 8] Fig. 8 is a diagram illustrating a configuration example of an MCF transmission path.
[Fig. 9] Fig. 9 is a diagram illustrating a configuration example of an optical transmission system according to a fourth example embodiment.

### Example Embodiment

Example embodiments of the present invention will be described below with reference to the drawings. The arrows shown in the drawings illustrate directions of light, electric signals, and the like, and are not intended to limit these properties. In the example embodiments and the drawings, the already described elements are denoted by the same reference numerals, and redundant description may be omitted.

### (First Example Embodiment)

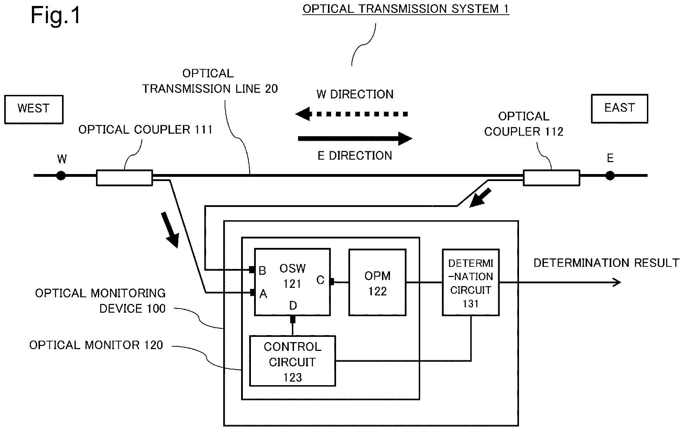

Fig. 1 is a diagram illustrating a configuration example of an optical transmission system 1 according to a first example embodiment of the present invention. The optical transmission system 1 includes an optical monitoring device 100, an optical transmission line 20, an optical coupler 111, and an optical coupler 112. The optical monitoring device 100 includes an optical monitor 120 and a determination circuit 131. The optical monitor 120 includes an optical switch (OSW) 121, an optical power meter (OPM) 122, and a control circuit 123.

The optical transmission line 20 is an optical fiber transmission line including one core. The optical couplers 111 and 112 are 20dB optical couplers. As the optical couplers 111 and 112, directional couplers having a split ratio of 99:1 can be used. In this case, split sides of the optical couplers 111 and 112 are connected to the optical transmission line 20 side in such a way that 99% of light propagates. The optical couplers 111 and 112 are disposed in the same core of the optical transmission line 20. The optical couplers 111 and 112 may be included in the optical monitoring device 100. The optical coupler 111 and the optical coupler 112 can be referred to as a first optical coupler and a second optical coupler, respectively.

The optical switch 121 is a 1×2 optical switch, and connects one of a terminal A and a terminal B to a terminal C. The optical switch 121 is controlled by a control signal applied to a control terminal D. The terminal A, the terminal B, and the terminal C are optical terminals (connection points), and the control terminal D is an electrical terminal.

In Fig. 1 and the following drawings, a right side of the optical transmission line 20 is referred to as EAST, and a left side is referred to as WEST. Then, the optical transmission line 20 transmits light in either a direction from EAST to WEST (hereinafter, referred to as "W direction") or a direction from WEST to EAST (hereinafter, referred to as "E direction") in Fig. 1. That is, the optical transmission line 20 does not simultaneously transmit the light in the E direction and the light in the W direction in the same core. The term "light" used in the present application includes an optical signal.

The optical coupler 111 splits light propagating in the E direction into two directions. One of the lights split by the optical coupler 111 propagates through the optical transmission line 20 toward the optical coupler 112. The other of the lights split by the optical coupler 111 is directed to the terminal A of the optical switch 121. The optical coupler 112 splits light propagating in the W direction into two directions. One of the lights split by the optical coupler 112 propagates through the optical transmission line 20 toward the optical coupler 111. The other of the lights split by the optical coupler 112 is directed to the terminal B of the optical switch 121.

The control circuit 123 outputs a control signal to the control terminal D of the optical switch 121. When the control signal input to the control terminal D is at an H level (high potential, e.g. 5 V), the optical switch 121 connects the terminal A and the terminal C. When the control signal input to the control terminal D is at an L level (low potential, e.g. 0 V), the optical switch 121 connects the terminal B and the terminal C. When a binary signal (for example, a rectangular wave) for repeating the H level and the L level is applied to the control terminal D as a control signal, the light in the E direction split by the optical coupler 111 and the light in the W direction split by the optical coupler 112 are alternately output from the terminal C of the optical switch 121. In this manner, the control circuit 123 switches a connection destination of the terminal C of the optical switch 121 between the terminal A and the terminal B. The optical power meter 122 measures optical power of light output from the terminal C of the optical switch 121.

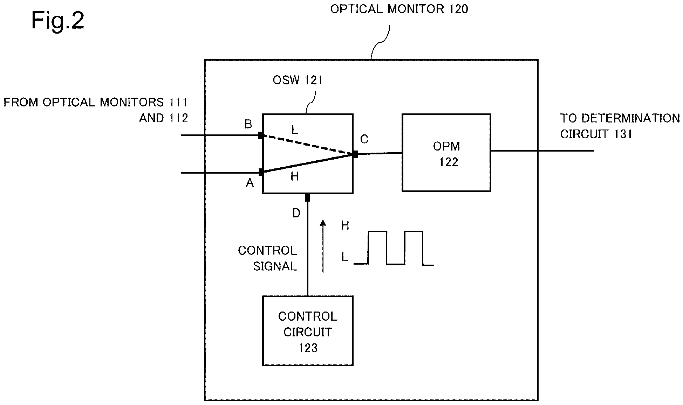

Fig. 2 is a diagram illustrating measurement of optical power in the optical monitor 120. As described above, the optical switch 121 connects the terminal A and the terminal C when the control signal input to the control terminal D is at the H level, and connects the terminal B and the terminal C when the control signal is at the L level. Therefore, in a case where there is light propagating in the E direction through the optical transmission line 20 when the control signal is at the H level, the light in the E direction split by the optical coupler 111 is input to the optical power meter 122 via the terminal A and the terminal C of the optical switch 121. In a case where there is no light propagating through the optical transmission line 20 in the E direction when the control signal is at the H level, there is no light split by the optical coupler 111, and thus no light is input to the optical power meter 122.

Similarly, in a case where there is light propagating in the W direction through the optical transmission line 20 when the control signal is at the L level, the light in the W direction split by the optical coupler 112 is input to the optical power meter 122 via the terminal B and the terminal C of the optical switch 121. When there is no light propagating through the optical transmission line 20 in the W direction when the control signal is at the L level, there is no light split by the optical coupler 112, and thus no light is input to the optical power meter 122.

That is, when the control signal is at the H level, the presence or absence of light detected by the optical power meter 122 is associated with the presence or absence of light propagating in the E direction. When the control signal is at the L level, the presence or absence of light detected by the optical power meter 122 is associated with the presence or absence of light propagating in the W direction. Therefore, the direction of the light propagating through the optical transmission line 20 can be determined from the switching state of the optical switch 121 and the measurement result of the optical power in the optical power meter 122 at that time. The optical power meter 122 outputs a signal indicating the measured optical power.

Here, the optical monitor 120 including the optical switch 121, the optical power meter 122, and the control circuit 123 can be referred to as an optical power measurement means. The optical switch 121, the optical power meter 122, and the control circuit 123 can be referred to as a first optical switch, a first optical power meter, and a first control circuit, respectively.

Referring again to Fig. 1, the optical power meter 122 measures optical power of light input from the optical switch 121 and outputs the optical power to the determination circuit 131. Here, the optical power meter 122 outputs the power of the light split by the optical coupler 111 and the power of the light split by the optical coupler 112 to the determination circuit 131 in a time division manner in association with the level of the control signal. A signal indicating optical power is input from the optical power meter 122 to the determination circuit 131, and a control signal is input from the control circuit 123. The determination circuit 131 associates the input optical power with a potential of the control signal, and outputs a determination result. That is, the determination circuit 131 treats an optical power P1 input when the control signal is at the H level as the optical power of the light split from the optical coupler 111, and treats an optical power P2 input when the control signal is at the L level as the optical power of the light split from the optical coupler 112. For each of the notified optical powers P1 and P2, the determination circuit 131 determines that "light has been detected" (ON) if the optical power is equal to or greater than a predetermined threshold, and determines that "light is not detected" (OFF) if the optical power is less than the predetermined threshold.

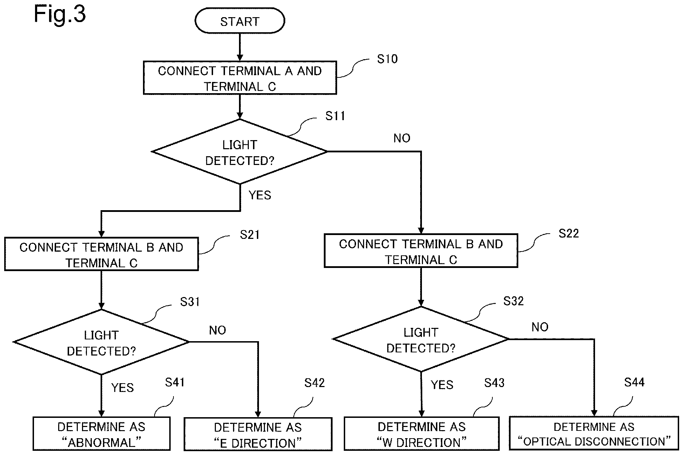

Fig. 3 is a flowchart illustrating an example of determination of the direction of light propagating through the optical transmission line 20 in the determination circuit 131. The optical switch 121 is controlled by a control signal that is a rectangular wave. When the terminal A and the terminal C of the optical switch 121 are connected (step S10), it is confirmed whether light is detected by the optical power meter 122 (step S11). Next, when the terminal B and the terminal C of the optical switch 121 are connected regardless of whether light is detected (steps S21 and S22), the determination circuit 131 checks whether light is detected by the optical power meter 122 (steps S31 and S32).

When light is detected in step S11 (step S11: YES) and no light is detected in step S31 (step S31: NO), the following state is obtained. That is, there is light split from the optical coupler 111 to the terminal A of the optical switch 121, and there is no light split from the optical coupler 112 to the terminal B of the optical switch 121. In this case, the determination circuit 131 determines that the light propagating through the optical transmission line 20 is in the E direction (step S42).

On the other hand, when no light is detected in step S11 (step S11: NO) and light is detected in step S32 (step S32: YES), the following state is obtained. That is, there is no light split from the optical coupler 111 to the terminal A of the optical switch 121, and there is light split from the optical coupler 112 to the terminal B of the optical switch 121. In this case, the determination circuit 131 determines that the light propagating through the optical transmission line 20 is in the W direction (step S43).

However, it is also conceivable that the light detection result is as follows. First, in a case where light is detected in step S11 (step S11: YES) and light is also detected in step S31 (step S31: YES), light is split from both the optical couplers 111 and 112. In this case, the determination circuit 131 determines that the light in the E direction and the light in the W direction are in an abnormal state of simultaneously propagating through the optical transmission line 20 (step S41). When the light is not detected in step S11 (step S11: NO), and when the light is not detected in step S32 (step S32: NO), the light is not split from either of the optical couplers 111 and 112. In this case, the determination circuit 131 determines that neither the light in the E direction nor the light in the W direction is propagated through the optical transmission line 20 (optical disconnection) (step S44).

As described above, the determination circuit 131 outputs the determination results associated to steps S41 to S44 based on the optical power P1 when the control signal is at the H level and the optical power P2 when the control signal is at the L level. The determination result is output as, for example, a 2-bit electric signal associated to the content of any of steps S41 to S44. Alternatively, the determination result may be output as display of an image or output of a sound indicating the contents of steps S41 to S44, or output as an image signal or a sound signal.

As described above, the optical monitoring device 100 according to the present example embodiment can determine the state of light propagation in the optical transmission line 20 for each core. Furthermore, the optical monitoring device 100 can detect abnormality of light propagating through the optical transmission line 20. This is because the presence or absence of light having different propagation directions is detected in one core, and the propagation state of light in the optical transmission line 20 is determined from the detection result.

### (Modification of First Example Embodiment)

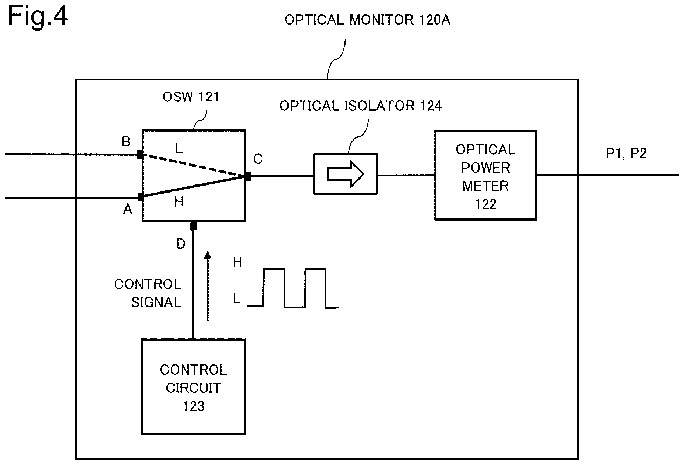

Fig. 4 is a diagram illustrating a configuration example of an optical monitor 120A which is a modification of the optical monitor 120. The optical monitor 120A is different from the optical monitor 120 in that an optical isolator 124 is provided at an optical input portion of the optical power meter 122 between the optical switch 121 and the optical power meter 122. The optical isolator 124 transmits light propagating from the optical switch 121 toward the optical power meter 122 with a low loss, and suppresses propagation of light propagating in a reverse direction.

When stray light caused by reflection, diffraction, or the like is generated on a light receiving surface or the like of the optical power meter 122, the generated stray light may be coupled to the optical transmission line 20 via the optical switch 121. Since stray light causes noise to light propagating through the optical transmission line 20, the stray light causes deterioration in transmission quality of light propagating through the optical transmission line 20. However, by using the optical isolator 124, it is possible to suppress coupling of stray light generated in the optical power meter 122 with the optical transmission line 20. As a result, deterioration in transmission quality of light propagating through the optical transmission line 20 is suppressed.

### (Minimum Configuration of First Example Embodiment)

The effect of the optical monitoring device 100 illustrated in Fig. 1 can also be obtained by the following configuration. In parentheses are phrases or reference signs in Fig. 1.

The optical monitoring device (100) includes an optical power measurement means (120) and a determination means (131). The first split light and the second split light are input to the optical power measurement means (120). The first split light is generated by splitting light propagating through the core of the optical transmission line (20) in a first direction (E direction). The second split light is generated by splitting light propagating through the core in a second direction (W direction) that is a direction different from the first direction (E direction). Then, the optical power measurement means (120) measures a first optical power that is the optical power of the first split light and a second optical power that is the optical power of the second split light.

Then, the determination means (131) determines the propagation state of the light of the optical transmission line (20) by identifying the presence or absence of the light propagating through the optical transmission line (20) and the propagation direction based on the first optical power and the second optical power, and outputs the result as a determination result.

### (Second Example Embodiment)

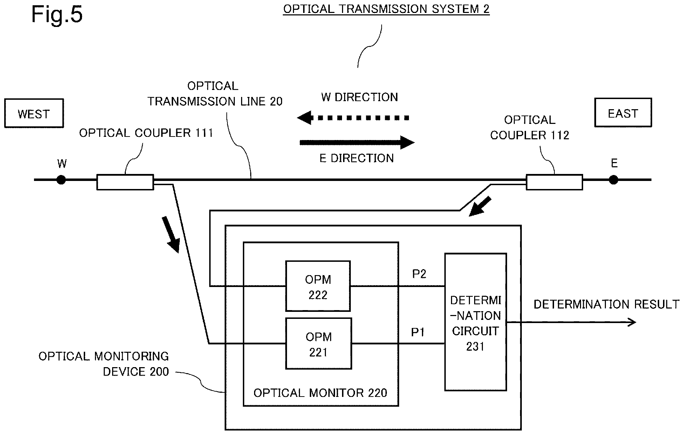

Fig. 5 is a diagram illustrating a configuration example of an optical transmission system 2 according to a second example embodiment. The optical transmission system 2 includes an optical monitoring device 200 instead of the optical monitoring device 100 of the optical transmission system 1. As compared with the optical monitoring device 100, the optical monitoring device 200 includes an optical monitor 220 and a determination circuit 231. The optical monitor 220 includes optical power meters 221 and 222. The optical power meter 221 measures an optical power P1 of the light split by an optical coupler 111 and notifies the determination circuit 231 of the measured optical power P1. The optical power meter 222 measures an optical power P2 of the light split by the optical coupler 112 and notifies the determination circuit 231 of the measured optical power P2. Here, the optical power meter 221 may be referred to as a second optical power meter, and the optical power meter 222 may be referred to as a third optical power meter.

For each of the optical power P1 and P2 notified from the optical monitor 220, the determination circuit 231 determines that "light is detected" (ON) if the optical power P1 and P2 is equal to or greater than a predetermined threshold, and determines that "light is not detected" (OFF) if the optical power P1 and P2 is less than the predetermined threshold. Then, a propagation state of light in the optical transmission line 20 is determined according to whether each of the optical powers P1 and P2 is "ON" or "OFF".

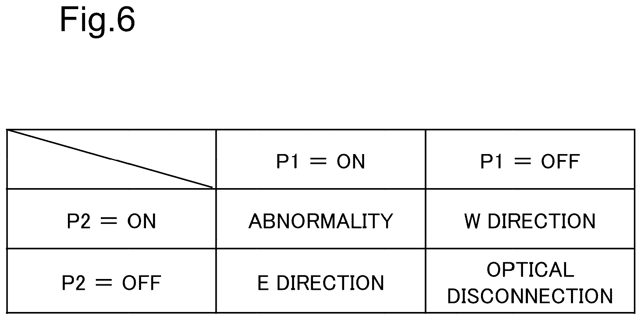

Fig. 6 is a diagram illustrating an example of a relationship between measurement results of the optical powers P1 and P2 and determination in the determination circuit 231. A case where the optical power P1 is ON and the optical power P2 is OFF indicates that the light split by the optical coupler 111 is detected but the light split by the optical coupler 112 is not detected. That is, in this case, it is determined that the propagation direction of the light is an E direction. A case where the optical power P1 is OFF and the optical power P2 is ON indicates that the light split by the optical coupler 111 is not detected but the light split by the optical coupler 112 is detected. That is, in this case, it is determined that the propagation direction of the light is a W direction.

A case where both the optical powers P1 and P2 are OFF indicates that the light split from both the optical couplers 111 and 112 is not detected. That is, in this case, the determination circuit 131 determines that no light is propagating through the optical transmission line 20 (that is, optical disconnection). A case where both the optical powers P1 and P2 are ON, it indicates that the light split from both the optical couplers 111 and 112 is detected. That is, in this case, the determination circuit 131 determines that the optical transmission line 20 is in an abnormal state in which light in both directions is transmitted.

Similarly to the determination circuit 131 of the first example embodiment, the determination result may be output as a 2-bit electric signal. Alternatively, the determination result may be output as display of an image or output of a sound indicating the contents, or an image signal or a sound signal.

Similarly to the optical monitoring device 100 of the first example embodiment, the optical monitoring device 200 of the present example embodiment can determine a state of light propagation in the optical transmission line 20 for each core. The optical monitoring device 200 can simultaneously and independently measure the optical power of the light split by the optical couplers 111 and 112. The optical monitoring device 200 does not require a circuit that generates a control signal for controlling the optical switch 121, and thus the circuit configuration can be simplified.

### (Third Example Embodiment)

In order to expand a transmission capacity of an optical fiber transmission system, studies have been made on the use of an MCF for an optical transmission line. The coupled MCF, which is a type of MCF, is an MCF in which an interval between cores included in one optical fiber is relatively small. While the coupled MCF is suitable for increasing the capacity, there is a problem that light leaks to an adjacent core due to crosstalk.

In order to reduce an influence of crosstalk, lights having different propagation directions may be mixed in one MCF. For this reason, even when an optical transmission apparatus is added in the middle of an optical transmission line using an MCF, there is a need to grasp a propagation direction and a propagation state of light of each core of the MCF for each core.

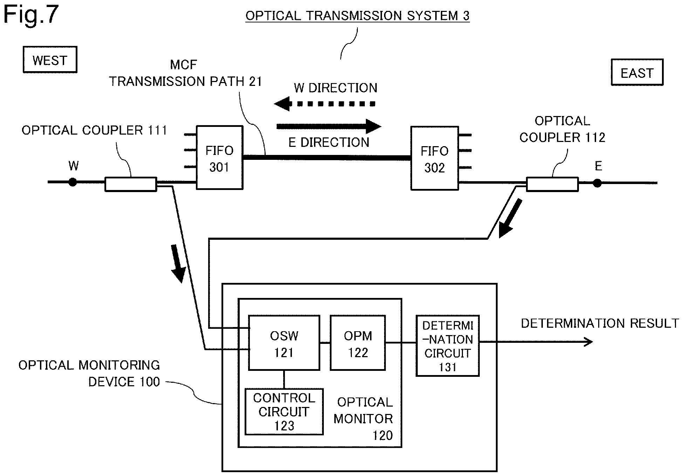

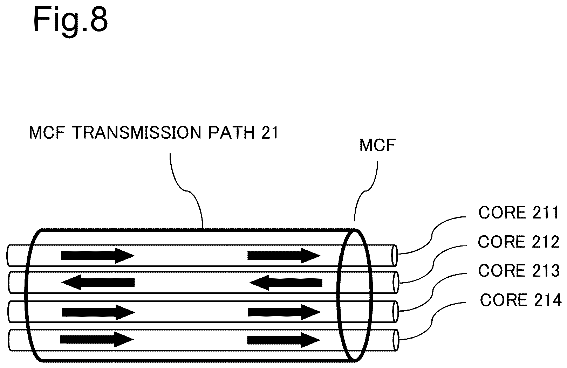

Fig. 7 is a diagram illustrating a configuration example of an optical transmission system 3 according to a third example embodiment. In the optical transmission system 3, an MCF transmission path 21 having a plurality of cores is used as an optical transmission line. A configuration example of the MCF transmission path 21 is illustrated in Fig. 8. The MCF transmission path 21 is a four-core MCF including four cores of cores 211 to 214. In Fig. 8, a direction of light propagating through the core 212 is different from that of other cores. The number of cores of the MCF transmission path 21 is not limited thereto.

A FIFO 301 and a FIFO 302 are connected to one end and the other end of the MCF transmission path 21, respectively. A Fan-In/Fan-Out (FIFO) is used to connect a single-core fiber (SCF) for each core of the MCF transmission path 21. One ends of the FIFOs 301 and 302 are MCFs, and both are connected to the MCF transmission path 21. The other ends of the FIFOs 301 and 302 are SCFs, and are connected to optical couplers 111 and 112, respectively, as illustrated in Fig. 7. That is, the optical coupler 111 is connected to a single-core fiber side (SCF side) of the FIFO 301, and the optical coupler 112 is connected to the SCF side of the FIFO 302. The optical monitoring device 100 illustrated in Fig. 7 has been described in the first example embodiment. However, instead of the optical monitoring device 100, the optical monitoring device 200 described in the second example embodiment can also be used.

The optical couplers 111 and 112 are connected to both ends of the same one core (for example, core 211 of Fig. 8) included in the MCF transmission path 21. With such a configuration, the optical monitoring device 100 can know a state of light propagating through the core 211 included in the MCF transmission path 21. Then, with connection of the optical couplers 111 and 112 to other cores (for example, any of cores 212 to 214) of the MCF transmission path 21 in the same manner as the core 211, the propagation state of light in each core of the MCF transmission path 21 can be known.

The optical monitoring device 100 according to the present example embodiment can determine a state of light propagation in the MCF transmission path 21 for each core. Furthermore, the optical monitoring device 100 can detect abnormality of light propagating through the optical transmission line 20. This is because the optical monitoring device 100 detects the presence or absence of light having different propagation directions in one core using the FIFOs 301 and 302, and determines the propagation state of light in the optical transmission line 20 from the detection result.

Instead of the FIFOs 301 and 302 and the optical couplers 111 and 112, an MCF coupler that splits the core included in the MCF transmission path 21 for each core may be used.

### (Fourth Example Embodiment)

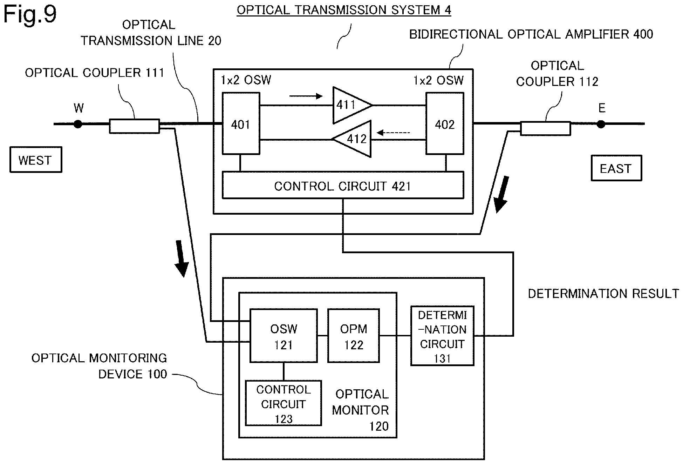

Fig. 9 is a diagram illustrating a configuration example of an optical transmission system 4 according to a fourth example embodiment of the present invention. The optical transmission system 4 includes an optical monitoring device 100, optical couplers 111 and 112, and a bidirectional optical amplifier 400. An optical transmission line 20 is connected to input and output of the bidirectional optical amplifier 400. The optical coupler 111 splits the light input to the bidirectional optical amplifier 400 from a WEST side and inputs the light to an optical switch 121 of the optical monitoring device 100. The optical coupler 112 splits the light input to the bidirectional optical amplifier 400 from an EAST side and inputs the light to the optical switch 121 of the optical monitoring device 100. The optical monitoring device 100 has been described in the first example embodiment. However, instead of the optical monitoring device 100, the optical monitoring device 200 described in the second example embodiment can also be used.

The bidirectional optical amplifier 400 is an optical amplification device including optical switches 401 and 402, optical fiber amplifiers 411 and 412, and a control circuit 421. The optical switches 401 and 402 are 1×2 optical switches and are controlled by the control circuit 421. Both the optical switches 401 and 402 connect the optical transmission line 20 to the optical fiber amplifier 411 or the optical fiber amplifier 412. The optical switches 401 and 402 are controlled in such a way that the same optical amplifier and the optical transmission line 20 are connected. That is, when the optical switch 401 connects the optical transmission line 20 on the WEST side and an input of the optical fiber amplifier 411, the optical switch 402 connects the optical transmission line 20 on the EAST side and an output of the optical fiber amplifier 411. When the optical switch 401 connects the optical transmission line 20 on the WEST side and an output of the optical fiber amplifier 412, the optical switch 402 connects the optical transmission line 20 on the EAST side and an input of the optical fiber amplifier 412. The optical switches 401 and 402 can be collectively referred to as second optical switches.

The bidirectional optical amplifier 400 includes two cores having different directions of light to be amplified. The optical switches 401 and 402 connect the core of the optical transmission line 20 to one of the two cores of the bidirectional optical amplifier 400. Light propagating through one of the two cores is amplified by the optical fiber amplifier 411, and light propagating through the other core is amplified by the optical fiber amplifier 412. Specifically, the optical fiber amplifier 411 amplifies light input from the WEST side of the optical transmission line 20. The light amplified by the optical fiber amplifier 411 is output to the EAST side of the optical transmission line 20. The optical fiber amplifier 412 amplifies light input from the EAST side of the optical transmission line 20. The light amplified by the optical fiber amplifier 412 is output to the WEST side of the optical transmission line 20. The optical amplifier including the optical fiber amplifiers 411 and 412 can be referred to as an optical amplifier including two cores having different directions of light to be amplified.

The control circuit 421 switches the optical switches 401 and 402 in such a way that the light propagating through the optical transmission line 20 is amplified in the optical fiber amplifier 411 or 412 as described above. A signal indicating a determination result of the direction of propagation through the optical transmission line 20 is input from the optical monitoring device 100 to the control circuit 421. The signal indicating the determination result is input to the control circuit 421 by the determination circuit 131 included in the optical monitoring device 100.

In a case where the signal indicating the determination result indicates that the propagation direction of light is the EAST direction, the control circuit 421 controls the optical switches 401 and 402 in such a way as to connect the optical transmission line 20 and the optical fiber amplifier 411. When the signal indicating the determination result indicates that the propagation direction of light is the WEST direction, the control circuit 421 controls the optical switches 401 and 402 in such a way as to connect the optical transmission line 20 and the optical fiber amplifier 412. Under such control, the propagation direction of the light amplified in the bidirectional optical amplifier 400 can be matched with the light propagating through the optical transmission line 20. The control circuit 421 may control the optical fiber amplifiers 411 and 412 in such a way that excitation light is supplied only to the optical fiber amplification to which light is input. The control circuit 421 may be referred to as a second control circuit that controls the second optical switch.

The configuration of the present example embodiment can also be applied to a configuration including an optical device having a transmission characteristic different depending on a propagation direction of light, such as an optical isolator, instead of the optical fiber amplifiers 411 and 412.

Example embodiments of the present invention can also be described as the following supplementary notes, but are not limited thereto.

### (Supplementary Note 1)

An optical monitoring device including:
an optical power measurement means for receiving a first split light generated by splitting light propagating through a core of an optical transmission line in a first direction and a second split light generated by splitting light propagating through the core in a second direction that is different from the first direction, and measuring a first optical power that is optical power of the first split light and a second optical power that is optical power of the second split light; and
a determination means for determining a propagation state of light in the optical transmission line by identifying presence or absence of light propagating through the optical transmission line and a propagation direction of the light based on the first optical power and the second optical power, and outputting the propagation state as a determination result.

### (Supplementary Note 2)

The optical monitoring device according to Supplementary Note 1, in which the determination means outputs, as the determination result, that
the propagation direction is the first direction in a case where the first optical power is detected and the second optical power is not detected,
that the propagation direction is the second direction when the second optical power is detected and the first optical power is not detected,
that no light is propagated through the optical transmission line in a case where neither the first optical power nor the second optical power is detected, and
that a propagation state of the optical transmission line is abnormal in a case where both of the first optical power and the second optical power are detected.

### (Supplementary Note 3)

The optical monitoring device according to Supplementary Notes 1 or 2, in which
the optical power measurement means includes a first optical switch, a first optical power meter, and a first control circuit,
the first optical switch inputs one of the first split light and the second split light to the first optical power meter based on a binary control signal output from the first control circuit, and
the first optical power meter outputs the first optical power and the second optical power to the determination means in a time division manner in association with a level of the control signal.

### (Supplementary Note 4)

The optical monitoring device according to supplementary Note 1 or 2, in which the optical power measurement means includes:
a second optical power meter that receives the first split light and outputs the first optical power; and
a third optical power meter that receives the second split light and outputs the second optical power.

### (Supplementary Note 5)

The optical monitoring device according to any one of Supplementary Notes 1 to 4, in which the optical power measurement means includes an optical isolator at an optical input unit.

### (Supplementary Note 6)

The optical monitoring device according to any one of Supplementary Notes 1 to 5, further including:
a first optical coupler that splits the first split light from the optical transmission line; and
a second optical coupler that splits the second split light from the optical transmission line.

### (Supplementary Note 7)

An optical transmission system including: the optical monitoring device according to Supplementary Note 6; and the optical transmission line.

### (Supplementary Note 8)

The optical transmission system according to Supplementary Note 7, in which
a core of the optical transmission line is one of a plurality of cores included in a multicore fiber (MCF) transmission line,
a Fan-In/Fan-Out (FIFO) is connected to each of both ends of the MCF,
the first optical coupler is connected to a single-core fiber side of one of the FIFOs, and
the second optical coupler is connected to a single-core fiber side of the other FIFO.

### (Supplementary Note 9)

The optical transmission system according to Supplementary Note 7, further including an optical amplification device between the first optical coupler and the second optical coupler, in which
the optical amplification device includes:
an optical amplifier including two cores that are different in directions of light to be amplified from each other;
a second optical switch that connects the optical transmission line to one of the two cores; and
a second control circuit that controls the second optical switch,
the first optical coupler is arranged to receive a light input to the optical amplification device as the first split light, and the second optical coupler is arranged to output a light input to the optical amplification device as the second split light, and
the second control circuit controls the second optical switch in such a way that the light in the determined propagation direction is amplified in a case where the determination means determines the propagation direction of only one of the light propagating in the first direction and the light propagating in the second direction.

### (Supplementary Note 10)

An optical monitoring method including:
splitting light propagating through a core of an optical transmission line in a first direction to generate first split light;
splitting light propagating through the core in a second direction different from the first direction to generate second split light;
measuring first optical power that is optical power of the first split light and second optical power that is optical power of the second split light; and
determining a propagation state of light in the optical transmission line by identifying presence or absence of light propagating through the optical transmission line and a propagation direction based on the first optical power and the second optical power.

While the present invention has been particularly shown and described with reference to the example embodiments thereof, the present invention is not limited to these example embodiments. It will be understood by those of ordinary skill in the art that various changes in form and details may be made therein without departing from the spirit and scope of the present invention as defined by the claims. For example, the present invention is applicable to an optical submarine cable system and an optical transmission system on land. Each example embodiment also discloses an example embodiment of an optical monitoring method in addition to the optical monitoring device and the optical transmission system.

The procedure executed in the control circuit of each example embodiment described above may be achieved by a central processing unit (CPU) included in each control circuit executing a program. The program is recorded in a fixed non-transitory recording medium. The recording medium is, for example, a semiconductor memory or a fixed magnetic disk device, but is not limited thereto. The CPU is, for example, a computer provided in a control circuit.

The configurations described in the respective example embodiments are not necessarily mutually exclusive. The functions and effects of the present invention may be achieved by a configuration combining all or some of the above-described example embodiments.

### Reference Signs List

1-4 optical transmission system
20 optical transmission line
21 MCF transmission path
100, 200 optical monitoring device
111, 112 optical coupler
120, 120A, 220 optical monitor
121 optical switch
122 optical power meter
123 control circuit
124 optical isolator
131, 231 determination circuit
211-214 core
400 bidirectional optical amplifier
401, 402 optical switch
411, 412 optical fiber amplifier
421 control circuit

## Claims

1. An optical monitoring device comprising:
optical power measurement means for receiving a first split light generated by splitting light propagating through a core of an optical transmission line in a first direction and a second split light generated by splitting light propagating through the core in a second direction that is different from the first direction, and measuring a first optical power that is optical power of the first split light and a second optical power that is optical power of the second split light; and
determination means for determining a propagation state of light in the optical transmission line by identifying presence or absence of light propagating through the optical transmission line and a propagation direction of the light based on the first optical power and the second optical power, and outputting the propagation state as a determination result.

2. The optical monitoring device according to claim 1, wherein the determination means outputs, as the determination result, that
the propagation direction is the first direction in a case where the first optical power is detected and the second optical power is not detected,
the propagation direction is the second direction when the second optical power is detected and the first optical power is not detected,
no light is propagated through the optical transmission line in a case where neither the first optical power nor the second optical power is detected, and
a propagation state of the optical transmission line is abnormal in a case where both of the first optical power and the second optical power are detected.

3. The optical monitoring device according to claim 1 or 2, wherein
the optical power measurement means includes a first optical switch, a first optical power meter, and a first control circuit,
the first optical switch inputs one of the first split light and the second split light to the first optical power meter based on a binary control signal output from the first control circuit, and
the first optical power meter outputs the first optical power and the second optical power to the determination means in a time division manner in association with a level of the control signal.

4. The optical monitoring device according to claim 1 or 2, wherein the optical power measurement means includes:
a second optical power meter that receives the first split light and outputs the first optical power; and
a third optical power meter that receives the second split light and outputs the second optical power.

5. The optical monitoring device according to claim 1 or 2, wherein the optical power measurement means includes an optical isolator at an optical input unit.

6. The optical monitoring device according to claim 1 or 2, further comprising:
a first optical coupler that splits the first split light from the optical transmission line; and
a second optical coupler that splits the second split light from the optical transmission line.

7. An optical transmission system comprising: the optical monitoring device according to claim 6; and the optical transmission line.

8. The optical transmission system according to claim 7, wherein
a core of the optical transmission line is one of a plurality of cores included in a multicore fiber (MCF) transmission line,
a Fan-In/Fan-Out (FIFO) is connected to each of both ends of the MCF,
the first optical coupler is connected to a single-core fiber side of one of the FIFOs, and
the second optical coupler is connected to a single-core fiber side of the other FIFO.

9. The optical transmission system according to claim 7, further comprising an optical amplification device between the first optical coupler and the second optical coupler, wherein
the optical amplification device includes:
an optical amplifier including two cores that are different in directions of light to be amplified from each other;
a second optical switch that connects the optical transmission line to one of the two cores; and
a second control circuit that controls the second optical switch,
the first optical coupler is arranged to output a light input to the optical amplification device as the first split light, and the second optical coupler is arranged to output a light input to the optical amplification device as the second split light, and
the second control circuit controls the second optical switch in such a way that the light in the determined propagation direction is amplified in a case where the determination means determines the propagation direction of only one of the light propagating in the first direction and the light propagating in the second direction.

10. An optical monitoring method comprising:
splitting light propagating through a core of an optical transmission line in a first direction to generate first split light;
splitting light propagating through the core in a second direction different from the first direction to generate second split light;
measuring first optical power that is optical power of the first split light and second optical power that is optical power of the second split light; and
determining a propagation state of light in the optical transmission line by identifying presence or absence of light propagating through the optical transmission line and a propagation direction based on the first optical power and the second optical power.
